# DEMANDE DE BREVET EUROPEEN

(11) **EP 1 798 281 A1**
(43) Date de publication de la demande: **20.06.2007**
(21) Numéro de dépôt: 06301247.0
(22) Date de dépôt: 13.12.2006
(51) Int. Cl.: C12G 1/08, F25D 3/11, F25D 13/06

(54) **Machine de refroidissement utilisee dans le domaine de l'elaboration des vins selon la methode dite champenoise**

(30) Priorité: 14.12.2005 FR 0553865
(71) Demandeur: Etudes et Creation E.C.B. Société à responsabilité Limitée à associé unique, 51200 Epernay (FR); Habillage et Communication, 51530 Mardeuil (FR)
(72) Inventeur: Ballu, Jean-Louis, F-51200, Epernay (FR); Valet, Jean-Marie, F-51200, Epernay (FR); Tixier, Pierre, F-51200, Epernay (FR); Hardy, Georges, F-51530, Oiry (FR)
(74) Mandataire: Rhein, Alain

(57) **Abrégé**

Machine de refroidissement utilisée dans le domaine de l'élaboration des vins selon la méthode dite champenoise pour préparer les bouteilles (2) à l'opération dite de dégorgement, du type comprenant une cuve (3) contenant de l'azote liquide (L) et associée à des moyens (4, 41, 42, 43) aptes à maintenir un niveau (N) de remplissage constant, et des moyens de transfert (1) des bouteilles (2) retournées, en sorte d'en faire plonger l'extrémité dans la cuve (3), les bouteilles (2) étant munies d'un dispositif de fermeture (21) prévu apte à recevoir et à retenir le dépôt formé pendant la fermentation du vin.

La machine est munie de moyens (32) aptes à limiter la profondeur d'enfoncement des bouteilles (2) dans la cuve (3) lors de leur déplacement lequel enfoncement, de même que le relèvement, est réalisé, au travers des moyens de transfert (1), de manière progressive au gré dudit déplacement.

## Description

La présente invention a pour objet une machine de refroidissement utilisée dans le domaine de l'élaboration des vins selon la méthode dite champenoise, pour préparer les bouteilles à l'opération dite de dégorgement.

La méthode champenoise consiste essentiellement à provoquer, après une première fermentation dite "alcoolique" en cuve, et éventuellement une deuxième fermentation dite "malolactique", en bouteille, une seconde, ou troisième, fermentation en ajoutant au vin des ferments qui vont lentement transformer le sucre en alcool et en gaz carbonique. Après une période de vieillissement, la fermentation produit un dépôt qui doit être évacué, ce qui est réalisé lors de l'opération dite de dégorgement. Afin de laisser échapper le moins de vin possible lors de cette opération de dégorgement qui est réalisée bouteille à l'endroit, et d'éviter que le dépôt ne redescende dans la bouteille, on en refroidit le col en l'immergeant dans un bain de liquide frigorigène jusqu'à la formation d'un glaçon renfermant les particules du dépôt, il suffit ensuite d'évacuer le glaçon qui renferme le dépôt, le vin évacué sous forme de glace étant ensuite remplacé.

Il existe à ce jour essentiellement un seul procédé pour réaliser mécaniquement la formation du glaçon dans une bouteille, et qui consiste à plonger le col des bouteilles dans un bain de saumure ou de glycol, comme cela est décrit dans les documents FR 2.578.037 et FR 2.854.450 par exemple. Ce procédé présente des inconvénients en ce sens que la manipulation du glycol est peu agréable, et que ce produit est peu compatible avec un environnement alimentaire.

Pour pallier ces inconvénients il a été proposé dans le document FR 2.538.885 d'utiliser un autre liquide frigorigène plus froid, à savoir de l'azote liquide, en sorte notamment d'accélérer l'étape de refroidissement. L'utilisation de l'azote liquide présente toutefois un inconvénient majeur, celui de faire éclater les bouteilles de verres lorsqu'il vient au contact de celles-ci. Ainsi, la machine décrite dans ce document n'a jamais pu être utilisée.

Il a été également proposé, notamment dans le document FR 2.715.134, un dispositif de fermeture de bouteilles qui consiste en une capsule en matériau conducteur de la chaleur, comprenant un fond et périphériquement une jupe de sertissage par plissage, et dont ledit fond présente une forme concave en sorte de constituer un réservoir apte à recevoir et à retenir le dépôt formé pendant la fermentation du vin. Le dépôt à éliminer étant dans la capsule il suffit de ne faire tremper que celle-ci dans un liquide frigorigène, de l'azote liquide de préférence, l'enlèvement de ladite capsule étant suffisant à l'extraction du dépôt, avec une perte minimale de vin.

Il subsiste toutefois un inconvénient, celui que la machine objet du document FR 2.538.885 ne permet pas de contrôler de manière précise le niveau d'enfoncement, et de plus, l'action de plonger l'extrémité d'une bouteille dans l'azote liquide est suffisant à générer des remous susceptibles de mettre l'azote liquide en contact avec le verre. Il est bien entendu possible de procéder à une introduction lente, ce qui est cependant incompatible avec des exigences de productivité.

Il a par ailleurs été évoqué la possibilité d'une méthode consistant à introduire et de caler les bouteilles dans un réceptacle, lequel est ensuite abaissé de telle sorte que seuls les bouchons trempent dans un bain d'azote liquide, dont le niveau est régulé de façon précise afin de limiter les contacts avec le verre. Cette méthode n'a, à ce jour, pas été exploitée, du fait notamment des difficultés à contrôler les remous générés lors du trempage, par l'entrée des bouteilles ainsi que par leur sortie du liquide.

La présente invention a pour but de proposer une machine de refroidissement utilisée dans le domaine de l'élaboration des vins selon la méthode dite champenoise, qui utilise un liquide frigorigène tel que l'azote liquide, sans présenter les divers inconvénients précités et permettant dans un espace limiter de traiter un grand nombre de bouteilles.

La machine de refroidissement utilisée dans le domaine de l'élaboration des vins selon la méthode dite champenoise pour préparer les bouteilles à l'opération dite de dégorgement selon l'invention, est du type comprenant une cuve ou analogue contenant un liquide frigorigène tel que de l'azote liquide et associée à des moyens aptes à maintenir un niveau de remplissage constant, et des moyens de transfert desdites bouteilles retournées, en sorte d'en faire plonger l'extrémité dans ladite cuve, lesdites bouteilles étant munies d'un dispositif de fermeture qui consiste en une capsule comprenant un fond présentant une forme concave pour constituer un réservoir apte à recevoir et à retenir le dépôt formé pendant la fermentation du vin, ladite machine se caractérisant essentiellement en ce qu'elle est munie de moyens aptes à limiter la profondeur d'enfoncement desdites bouteilles dans ladite cuve lors de leur déplacement, lequel enfoncement, de même que le relèvement, est réalisé au travers desdits des moyens de transfert de manière progressive au gré dudit déplacement.

Selon une caractéristique additionnelle de la machine de refroidissement selon l'invention, la cuve est équipée de moyens aptes à permettre une relative étanchéité entre l'intérieur de ladite cuve et l'environnement extérieur.

Selon une autre caractéristique additionnelle de la machine de refroidissement selon l'invention, la cuve comporte une partie inférieure destinée à contenir le liquide frigorigène et qui est surmontée d'un rétrécissement dans le sens transversal, apte à limiter les échanges avec l'extérieur.

Selon une autre caractéristique additionnelle de la machine de refroidissement selon l'invention, les moyens de transfert comprennent des éléments supports de bouteilles présentant chacun au moins un trou permettant le passage du goulot d'une bouteille, et configurés pour s'étendre au-dessus de la cuve et couvrir celle-ci.

Selon une autre caractéristique additionnelle de la machine de refroidissement selon l'invention, les éléments supports sont associés à des moyens mobiles d'obturation du trou de passage du goulot de la bouteille.

Selon une autre caractéristique additionnelle de la machine de refroidissement selon l'invention, les moyens aptes à limiter la profondeur d'enfoncement des bouteilles consistent en une rampe longitudinale, immergée dans le liquide frigorigène, et contre laquelle vient en butée le dispositif de fermeture des bouteilles.

Selon une autre caractéristique additionnelle de la machine de refroidissement selon l'invention, elle comporte des moyens permettant que l'enfoncement des bouteilles dans la cuve et donc dans le liquide frigorigène soit réalisé de manière progressive au gré du déplacement desdites bouteilles.

Selon un mode de réalisation particulier de la machine de refroidissement selon l'invention, les moyens de transfert se présentent sous la forme d'une chaîne sans fin agencée en boucle et tendue sur deux axes horizontaux, chaque maillon consistant en une palette destinée à recevoir au moins une bouteille.

Selon un autre mode de réalisation de la machine de refroidissement selon l'invention, les moyens de transfert se présentent sous la forme d'un disque monté en rotation selon un axe vertical et constitué d'une succession de segments comprenant du côté intérieur un pivot horizontal et du côté extérieur des moyens de roulement ou de glissement aptes à se déplacer sur une rampe périphérique qui présente un bossage permettant le soulèvement desdits segments, lesquels sont munis chacun d'au moins un trou permettant le passage du goulot d'une bouteille, et donc le maintien de celle-ci retournée en vue de coopérer avec une la cuve disposée dessous.

Les avantages et les caractéristiques de la machine selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique en élévation, de profil et en coupe d'un premier mode de réalisation de la machine de refroidissement selon l'invention.
- la figure 2 représente une vue schématique en coupe transversale d'une partie de la même machine.
- la figure 3 représente une vue schématique en élévation et en coupe d'un second mode de réalisation de la machine de refroidissement selon l'invention.
- la figure 4 représente une vue schématique en plan d'une partie de coupe transversale d'une partie du même mode de réalisation.

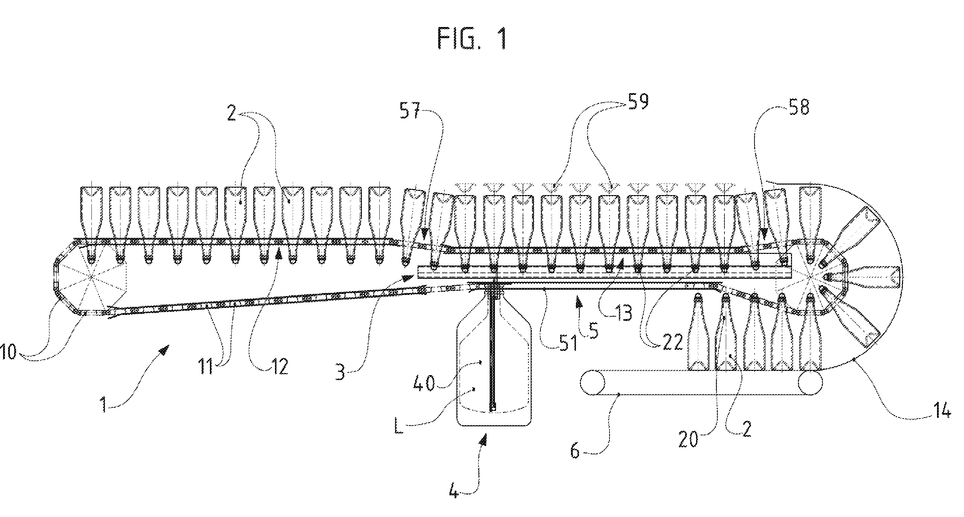

En référence à la figure 1, on peut voir qu'une machine de refroidissement selon l'invention comprend, dans un premier mode de réalisation, d'une part une chaîne 1 de transfert des bouteilles 2 retournées, une cuve 3 et des moyens 4 d'alimentation en liquide frigorigène L tel que de l'azote liquide.

La chaîne 1 de transfert se présente sous la forme d'une chaîne sans fin agencée en boucle et tendue entre deux arbres horizontaux, dont chacun des maillons 10 consiste en une palette percée d'un trou 11, de préférence tronconique, permettant d'y engager le goulot 20 d'une bouteille 2, en sorte que le brin supérieur 12 de la chaîne 1 maintienne et entraîne les bouteilles 2 en position retournée. Les bouteilles 2 sont simplement déposées dans les trous 11, de manière à leur laisser une certaine mobilité dans le sens vertical.

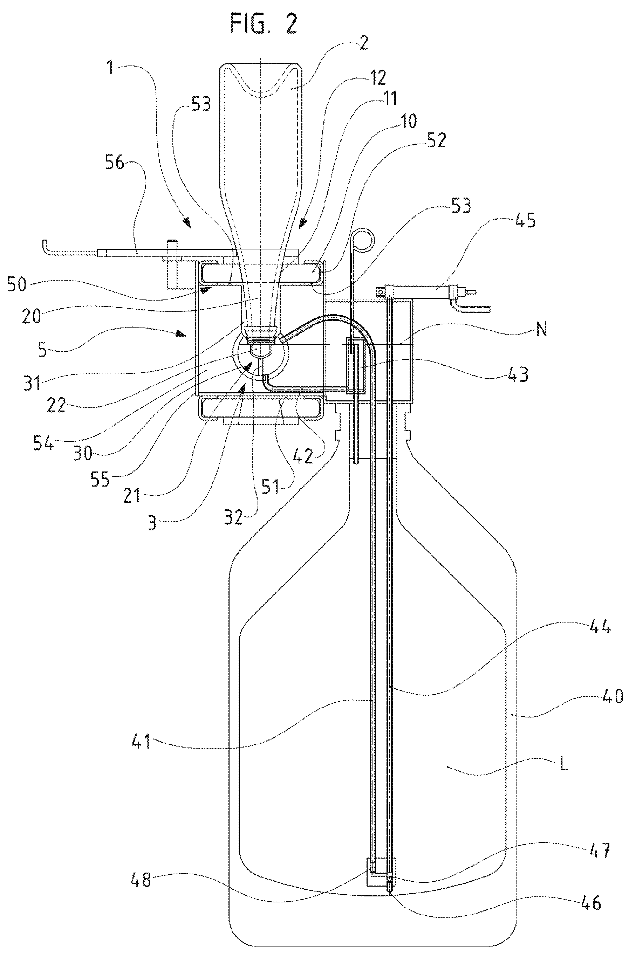

Le brin supérieur 12 de la chaîne 1 comprend une partie horizontale et rectiligne 13 qui s'étend au-dessus de la cuve 3 qui, comme cela est visible plus précisément sur la figure 2, consiste en une sorte de goulotte, et présente une partie inférieure 30 destinée à contenir le liquide frigorigène L, surmontée d'une partie 31 plus étroite, d'une largeur à peine supérieure à celle du goulot 20.

Du point de vue fabrication, la chaîne 1 est guidée dans un châssis 5, comprenant une glissière supérieure 50 et une glissière inférieure 51, la glissière supérieure 50 comprenant deux guides longitudinaux 52 de section en U, en regard l'un de l'autre et destinés à accueillir les bords des maillons 10 du brin supérieur 12. Les extrémités des ailes inférieures 53 des guides 52 sont jointives avec les bords extrêmes supérieurs de la partie 31, en sorte de créer une continuité et que les maillons 10 constituent un couvercle à la cuve 3, la seule ouverture étant les trous 11 eux-mêmes obturés par les bouteilles 2. Une telle configuration permet de limiter les pertes de frigories.

On notera que l'espace 54 compris entre les glissières supérieure 50 et inférieure 51, et dans lequel s'étend la cuve 3, est délimité par en caisson 55 qui peut être rempli d'un matériau isolant thermiquement, ou bien d'un liquide frigorigène L éventuellement de même nature que celui contenu dans cuve 3.

D'autre part, afin d'éviter une perte de frigorie dans le cas de l'absence d'une bouteille dans le trou 11 d'un maillon 10, il est prévu d'équiper le bord du caisson 55 d'une succession d'éléments 56 aptes à s'étendre au-dessus de la partie rectiligne 13, et à être repoussés au passage des bouteilles 2.

La cuve 3 est associée aux moyens 4 d'alimentation en liquide frigorigène L tel que de l'azote liquide, lesquels comprennent un récipient 40 apte à délivrer ce liquide L. Comme cela est visible sur la figure 2, les moyens 4 d'alimentation comprennent, afin de maintenir un niveau de remplissage constant de la cuve 3, d'une part un conduit 41 d'arrivée débouchant dans la cuve 3, et d'autre part, débouchant dans le fond de la cuve 3, un conduit 42 relié à une cuve 43 de retour de niveau réglable permettant d'atteindre le niveau de remplissage N souhaité.

D'autre part, on notera le conduit 41 est alimenté en liquide frigorigène L au travers d'un système à clapets permettant d'éviter les pertes de frigories.

Ainsi, les moyens 4 d'alimentation comportent de plus un tube 44 qui plonge dans le récipient 40, dont l'extrémité extérieure est connectée à un vérin pneumatique à rappel élastique 45, tandis que son extrémité interne 46 débouche dans le récipient 40 au travers d'un clapet 47 , et est connectée, en aval de ce clapet 47, au conduit 41, lequel est muni d'un clapet 48.

On comprendra que lorsque le vérin pneumatique 45 chasse de l'air dans le conduit 44, cela a pour effet de chasser le liquide L dans le conduit 41 en forçant le clapet 48, tandis que lors du rappel élastique, il se crée une dépression qui aspire du liquide L au travers de l'extrémité 46 en forçant le clapet 47 pour emplir le conduit 44 de liquide L. Ce mode de pompage évite d'introduire de l'air, qui plus est chaud, dans le récipient 40.

Les bouteilles 2 sont munies d'un dispositif de fermeture 21, comprenant un réservoir 22 apte à recevoir et à retenir le dépôt formé pendant la fermentation du vin. Afin de congeler le dépôt et d'empêcher le contact du liquide frigorigène L avec le verre, le fond de la cuve 3 est muni d'une butée de profondeur qui consiste en l'occurrence en une nervure longitudinale 32 destinée à recevoir en butée le réservoir 22, la hauteur de cette nervure étant bien entendu fonction du niveau N et de la hauteur du réservoir 22.

En fonctionnement, la chaîne 1 est chargée en amont de bouteilles 2 dont les dispositifs de fermeture 21 sont, au gré du déplacement de la chaîne 1, immergés dans le liquide frigorigène L, puis, en aval de la chaîne 1, les bouteilles 2 sont retournées et évacuées vers un poste de dégorgement.

Dans le mode de réalisation représenté, le retournement des bouteilles 2 est réalisé par la chaîne 1 en association avec un guide semi-circulaire 14 sur lequel prennent appui les bouteilles 2, leur évacuation étant réalisée au moyen d'une bande de transfert 6.

Afin d'éviter la création de remous à la surface du liquide L, l'entrée et la sortie sont réalisées progressivement, ce qui est obtenu au travers de parties 57 et 58 en pente douce de la glissière supérieure 50 de part et d'autre de la partie rectiligne.

On notera que cette progressivité peut également être obtenue au niveau de la nervure 32.

La machine selon la présente invention permet ainsi de préparer des bouteilles équipées d'un dispositif de fermeture du type de celui du document FR 2.715.134, au moyen d'un liquide frigorigène tel que de l'azote liquide, sans risque d'éclatement des bouteilles, du fait que l'azote liquide ne peut entrer en contact avec le verre.

En effet, l'action descente et montée verticale crée des remous de type vagues concentriques intermittentes qu'il est difficile de maîtriser. Par contre, une entrée progressive en mouvement peut également générer des remous, mais sous forme de vagues longitudinales continues qu'il est plus facile de maîtriser.

On notera par ailleurs la présence, à l'aplomb du caisson 55, d'un dispositif 59, représenté de manière schématique, permettant de saisir simultanément les bouteilles 2 plongées dans la cuve 3, permettant ainsi de les en extraire dans le cas d'un dysfonctionnement des moyens de transfert.

Selon une application préférentielle de la machine selon l'invention, celle-ci comporte plusieurs cuves 3 disposées parallèlement et, soit les maillons 10 sont percés d'autant de trous 11, soit à chacune de ces cuves 3 correspond une chaîne 1, en sorte de pouvoir traiter en parallèle un grand nombre de bouteilles 2.

De manière traditionnelle les caisses dans lesquelles les bouteilles sont stockées sur pointes présentent des dimensions permettant de disposer à chaque niveau douze rangées de dix bouteilles, aussi, il est avantageusement possible de concevoir une machine selon l'invention comportant une chaîne 1 qui, comme cela est représenté sur la figure 1, présente en amont des cuves 3 une capacité de chargement de dix bouteilles dans le sens longitudinal, et reproduite douze fois dans le sens transversal.

Une telle machine peut donc être associée à un robot manipulateur apte à saisir dans une caisse un niveau entier de bouteilles pour le déposer sur la machine de refroidissement selon l'invention, ce qui n'est pas possible actuellement sur les machines de refroidissement existantes, puisque, notamment, le liquide frigorigène est contenu dans de véritables bassins qui présentent une emprise au sol très importante.

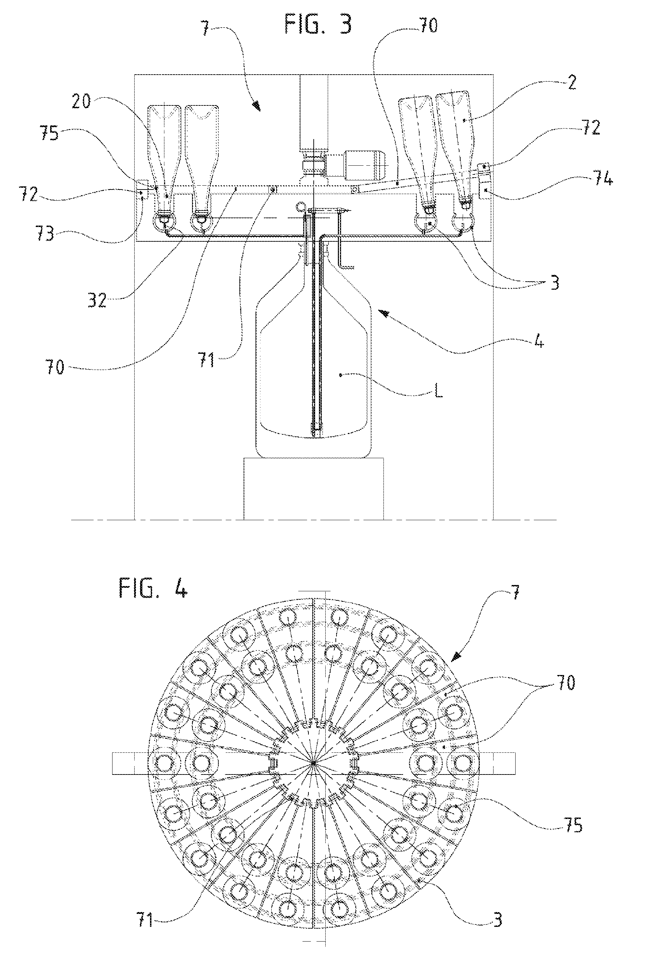

En référence maintenant aux figures 3 et 4, on peut voir un autre mode de réalisation de la machine de refroidissement selon l'invention, plus compact mais également moins performante en terme de cadence, cette machine étant réservée aux petites unités de fabrication.

On retrouve une cuve 3 en forme de goulotte et sa rampe 32 formant butée, et des moyens d'alimentation 4 en liquide frigorigène L tel de l'azote liquide. Dans ce mode de réalisation la cuve 3 présente une forme circulaire, tandis que les dispositifs de fermeture 21 des bouteilles 2 y sont trempés temporairement au travers d'un déplacement sur un moyen de transfert rotatif 7, qui se présente sous la forme d'un disque monté en rotation selon un axe vertical et constitué d'une succession de segments 70 comprenant du côté intérieur un pivot 71 horizontal et du côté extérieur des moyens 72 de roulement ou de glissement aptes à se déplacer sur une rampe périphérique 73 qui présente un bossage 74. Les segments 70 sont munis d'un trou 75 permettant le passage du goulot 20 d'une bouteille 2, et donc le maintien de celle-ci retournée.

On notera que ce mode de réalisation présente par ailleurs la particularité de comporter deux cuves 3 circulaires et concentriques alimentées par le même moyen d'alimentation 4, tandis que chacun des segments 70 présente deux trous 75 distants dans le sens radial, en sorte de pouvoir porter chacun deux bouteilles 2, et ainsi traiter deux fois plus de bouteilles.

Il serait bien entendu possible d'utiliser une seule cuve circulaire, plus large, mais cela serait coûteux en frigories.

On comprendra que lorsque les segments 70 du moyen de transfert rotatif 7 passent sur le bossage 74, cela correspond aux phases de chargement et de déchargement, et qu'en dehors du passage sur le bossage 74, les dispositifs de fermeture 21 trempent dans la cuve et donc dans le liquide frigorigène L.

Les extrémités du bossage 74 sont bien entendu en pente douce, en sorte que la rentrée et la sortie de la cuve 3 soient réalisées de manière progressive.

Tout comme pour le premier mode de réalisation, les segments 70 forment un couvercle à la cuve 3, et il peut également être prévu des moyens escamotables de fermeture des trous 75 en absence de bouteilles 2.

## Revendications

1. Machine de refroidissement utilisée dans le domaine de l'élaboration des vins selon la méthode dite champenoise pour préparer les bouteilles (2) à l'opération dite de dégorgement, du type comprenant une cuve (3) ou analogue contenant un liquide frigorigène (L) tel que de l'azote liquide et associée à des moyens (4, 41, 42, 43) aptes à maintenir un niveau (N) de remplissage constant, et des moyens de transfert (1 ; 7) desdites bouteilles (2) retournées, en sorte d'en faire plonger l'extrémité dans ladite cuve (3), lesdites bouteilles (2) étant munies d'un dispositif de fermeture (21) qui consiste en une capsule comprenant un fond présentant une forme concave pour constituer un réservoir (22) apte à recevoir et à retenir le dépôt formé pendant la fermentation du vin, machine **caractérisée en ce qu'**elle est munie de moyens (32) aptes à limiter la profondeur d'enfoncement desdites bouteilles (2) dans ledit liquide frigorigène (L) lors de leur déplacement, lequel enfoncement, de même que le relèvement, est réalisé, au travers desdits moyens de transfert (1 ; 7), de manière progressive au gré dudit déplacement.

2. Machine de refroidissement selon la revendication 1, **caractérisée en ce que**, la cuve (3) est équipée de moyens (10, 56 ; 70) aptes à permettre une relative étanchéité entre l'intérieur de ladite cuve (3) et l'environnement extérieur.

3. Machine de refroidissement selon la revendication 1 ou la revendication 2, **caractérisée en ce que** la cuve (3) comporte une partie inférieure (30) destinée à contenir le liquide frigorigène (L) et qui est surmontée d'un rétrécissement (31) dans le sens transversal, apte à limiter les échanges avec l'extérieur.

4. Machine de refroidissement selon l'une quelconque des revendications précédentes, **caractérisée en ce que** les moyens de transfert (1 ; 7) comprennent des éléments (10 ; 70) supports de bouteilles présentant chacun au moins un trou (11 ; 75) permettant le passage du goulot (20) d'une bouteille (2), et configurés pour s'étendre au-dessus de la cuve (3) et couvrir celle-ci.

5. Machine de refroidissement selon la revendication 4, **caractérisée en ce que** les éléments supports (10 ; 70) sont associés à des moyens mobiles (56) d'obturation du trou (11 ; 75) de passage du goulot (20) de la bouteille (2).

6. Machine de refroidissement selon l'une quelconque des revendications précédentes, **caractérisée en ce que** les moyens aptes à limiter la profondeur d'enfoncement des bouteilles consistent en une rampe longitudinale (32), immergée dans le liquide frigorigène (L), et contre laquelle vient en butée le dispositif de fermeture (21) des bouteilles (2).

7. Machine de refroidissement selon l'une quelconque des revendications précédentes, **caractérisée en ce que** les moyens de transfert se présentent sous la forme d'une chaîne (1) sans fin agencée en boucle et tendue sur deux axes horizontaux, chaque maillon (10) consistant en une palette destinée à recevoir au moins une bouteille (2).

8. Machine de refroidissement selon la revendication 7, **caractérisée en ce que** la chaîne (1) est guidée dans un châssis (5) comprenant une glissière supérieure (50) et une glissière inférieure (51), ladite glissière supérieure (50) comprenant deux guides longitudinaux (52) de section en U, en regard l'un de l'autre et destinés à accueillir les bords des maillons (10) du brin supérieur (12) de ladite chaîne (1), les extrémités des ailes inférieures (53) desdits guides (52) sont jointives avec les bords extrêmes supérieurs de la cuve (3), en sorte de créer une continuité et que lesdits maillons (10) constituent un couvercle à ladite cuve (3).

9. Machine de refroidissement selon l'une quelconque des revendications 1 à 6, **caractérisée en ce que** les moyens de transfert (7) se présentent sous la forme d'un disque monté en rotation selon un axe vertical et constitué d'une succession de segments (70) comprenant du côté intérieur un pivot horizontal (71) et du côté extérieur des moyens (72) de roulement ou de glissement aptes à se déplacer sur une rampe périphérique (73) qui présente un bossage (74) permettant le soulèvement desdits segments (70), lesquels sont munis chacun d'au moins un trou (75) permettant le passage du goulot (20) d'une bouteille (2), et donc le maintien de celle-ci retournée en vue de coopérer avec une la cuve (3) disposée dessous.
